# EUROPEAN PATENT APPLICATION

(11) **EP 2 296 361 A1**
(43) Date of publication of application: **16.03.2011**
(21) Application number: 09754377.1
(22) Date of filing: 31.03.2009
(51) Int. Cl.: H04N 1/04, F21S 2/00, F21V 8/00, G02B 6/00, G07D 7/12, H04N 1/028

(54) **ULTRAVIOLET LINE ILLUMINATING APPARATUS, CONTACTING IMAGE SENSOR, IMAGE READING APPARATUS, AND REDUCED OPTICAL SYSTEM IMAGE READING APPARATUS**

(30) Priority: 26.05.2008 JP 2008136211
(71) Applicant: Nippon Sheet Glass Company Limited, Tokyo 108-6321 (JP)
(72) Inventor: SAITO, Tomihisa, Tokyo 108-6321 (JP)
(74) Representative: Hall, Matthew Benjamin
(86) International application number: PCT/JP2009/001482
(87) International publication number: WO 2009/144867

(57) **Abstract**

To provide an ultraviolet line illumination apparatus to be incorporated into an apparatus for reading information of a document, for example a bill or bank note, printed with ink which emits fluorescence when being irradiated with ultraviolet rays. An ultraviolet line illumination apparatus 1 is configured by a rod-shaped light guide body 2 made of a cycloolefin-based resin, a light guide body case 3 to be loaded with the light guide body, and an ultraviolet LED light emission unit 4 attached to an end section of the light guide body case 3.

## Description

### Technical Field

The present invention relates to an ultraviolet line illumination apparatus used in an apparatus for reading information of a document, for example a bill or bank note, printed with ink which emits fluorescence when being irradiated with ultraviolet rays, and also relates to a contact type image sensor, an image reading apparatus, and a reduction optical system image reading apparatus, in each of which the ultraviolet line illumination apparatus is incorporated.

### Background Art

An apparatus is known which irradiates ultraviolet rays onto a document, for example a bill or bank note, printed with fluorescent ink, so as to determine the authenticity of the document. In the case where a counterfeit bill or bank note is to be detected, ultraviolet rays are first irradiated onto the bill or bank note, and then the presence or absence of forgery is discriminated by detecting the light quantity and pattern of the excited fluorescence. For this reason, a line light source which emits the ultraviolet rays across the entire width of the bill or bank note is required.

As such ultraviolet line illumination apparatus, the ultraviolet line illumination apparatuses described in Patent Documents 1 to 6 are known. In Patent Document 1 which discloses a pattern recognition method and a pattern recognition apparatus, it is described that an ultraviolet light source as a light source is provided on the front surface side of a bill or bank note, and that the ultraviolet light source has a spectral characteristic in which light of a wavelength capable of exciting the fluorescent material printed on the bill or bank note can be irradiated and in which light of a wavelength corresponding to the sensitivity of a photosensitive drum is not emitted.
Further, Patent Document 2 describes an authenticity discriminating apparatus which irradiates ultraviolet rays on a paper sheet, such as a bill or bank note, from an array formed by arranging a plurality of ultraviolet light emitting LEDs.

An image reading apparatus described in Patent Document 3 is used to identify a watermark section and a reflection section of a bill or bank note, or the like, and is configured to read the information of the bill or bank note by dividing the reading area of the bill or bank note into six sections by using a transmission light source formed into six groups each of which is provided with an infrared light source (IR LED) and an ultraviolet light source.

An organic matter decomposing unit using a photocatalyst and described in Patent Document 4 is provided with, as a light guide body for guiding ultraviolet rays from an ultraviolet light source to the photocatalyst, a light guide body made of a resin material selected from poly methyl methacrylate, polycarbonate, polypropylene, polyfluoroethylene, polyvinylidene fluoride, and polymethylpentene.

A gas treatment apparatus and a gas treatment filter which are described in Patent Document 5 are based on an invention relating to a gas treatment apparatus and a gas treatment filter which utilize a photocatalytic reaction. Here, ultraviolet rays from an ultraviolet light source are irradiated onto an end surface of a photocatalyst fiber, and leak into a photocatalyst applied on the surface of a light guide body while propagating through the photocatalyst fiber, as a result of which the malodorous components, and the like, contained in the gas are brought into contact with the photocatalyst excited by the ultraviolet rays, so as to be decomposed by the photocatalytic reaction. That is, the fiber, which is made of glass, or the like, is used as the light guide body, and a straight tube-shaped ultraviolet light source is used.

In Patent Document 6, it is described that a small number of LEDs are used to provide a planar white light source having a uniform illuminance distribution, and that a resin, such as an acryl-based resin, a methaoryl-based resin, and a polycarbonate-based resin, is used as the material of the light guide body.

Patent Document 1: Japanese Patent Laid-Open No. 09-035115
Patent Document 2: Japanese Patent Laid-Open No. 2004-280206
Patent Document 3: Japanese Patent Laid-Open No. 2007-164385
Patent Document 4: Japanese Patent No. 3015775
Patent Document 5: Japanese Patent Laid-Open No. 11-183728
Patent Document 6: Japanese Patent Laid-Open No. 2006-310112

### Disclosure of the Invention

### Problems to be Solved by the Invention

In Patent Document 1 in which the authenticity discriminating apparatus of a bill or bank note is disclosed, there is no specific description about an ultraviolet light source.
The authenticity discriminating apparatus disclosed in Patent Document 2 is configured by arranging a plurality of LEDs arranged in an array, and hence has such problems as that the cost and power consumption of the apparatus are high, that the uniformity of illumination is deteriorated due to the illumination ripple, and that the degree of long-term deterioration of the LED is different depending on the position of the LED in the array.
Also in Patent Document 3 in which the image reading apparatus is disclosed, there is no specific description about an ultraviolet light source.
The resin, which is used as the material of the light guide body and disclosed in Patent Document 4, has a low transmittance in the ultraviolet region, and hence cannot exhibit a sufficient function as the material of the light guide body. Further, in Patent Document 4, it is also proposed to use ultraviolet-ray transmitting glass, but there is a problem that, when the glass is used, the weight of the apparatus itself is increased and thereby the use range of the apparatus is limited.
The technical field of the gas treatment apparatus and the gas treatment filter, which are described in Patent Document 5, is different from the technical field of the line illumination apparatus, and hence the described technique cannot be applied as it is to the present invention.
Similarly to the light guide body described above, the light guide body disclosed in Patent Document 6 also has a low transmittance in the ultraviolet region, and hence cannot exhibit a sufficient function as a light guide body.

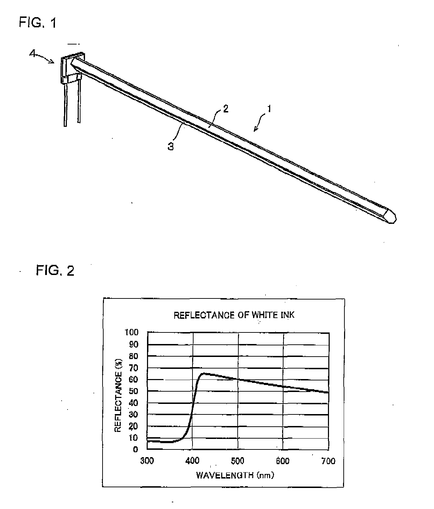

Further, an ultraviolet line illumination apparatus using a light guide body as shown in Figure 1 has been investigated. The apparatus 1 is configured such that a rod-shaped transparent light guide body 2 made of acrylic resin is loaded into a white case 3, and such that an ultraviolet LED light emission unit 4 is attached to an end section of the case 3. Such ultraviolet line illumination apparatus is an application of the technique of the RGB line illumination apparatus for reading color documents, and uses the transparent acrylic resin light guide body 2 which has a pattern printed thereon with white ink so as to be able to cause light scattering and reflection, the white case 3, and a white LED package serving as the ultraviolet LED light emission unit 4,

However, the conventional technique shown in Figure 1 has the following problems, and hence cannot withstand the use as the ultraviolet line illumination apparatus.

### Problem 1

Almost no illumination light is emitted from the light guide body.
Since as shown in Figure 2, the light reflectance of the white ink containing titanium dioxide is significantly lowered in the wavelength region of at most a little more than 400 mn, the white ink can reflect visible light but cannot reflect ultraviolet light. Therefore, the white ink printed on the light guide body does not perform the function as the reflecting material.

### Problem 2

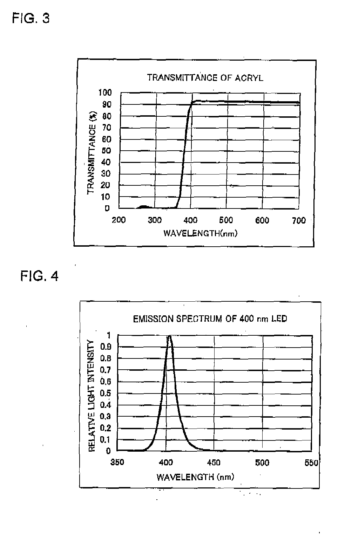

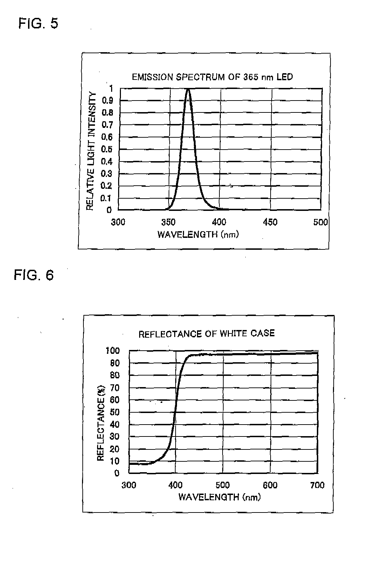

The ultraviolet LED has two light emission peak wavelengths in the vicinity of 365 nm and in the vicinity of 400 nm, but the light emission peak wavelength in the vicinity of 365 nm cannot be used by the conventional technique.
As shown in Figure 3, the light transmittance of the acrylic resin material is significantly lowered in the wavelength region of 400 nm or less. Therefore, the acrylic resin material can be used in some way for the LED having the emission peak wavelength of 400 nm, but cannot be used for the LED having the emission peak wavelength of 365 nm.
Note that Figure 4 shows a graph of the emission spectrum of the LED having the emission peak wavelength in the vicinity of 400 nm, and Figure 5 shows a graph of the emission spectrum of the LED having the emission peak wavelength in the vicinity of 365 nm.

### Problem 3

Even when the white case (made of, for example, polycarbonate containing titanium dioxide) is combined with the light guide body, or when the LED substrate resin (made of, for example, poly butylene terephthalate containing titanium dioxide) having a white color is used, it is not possible to obtain the illumination efficiency as in the case of the RGB line illumination apparatus.
This is because, similarly to the problem 1 described above, the white resin containing titanium dioxide has a light reflectance that is significantly lowered in the wavelength region of at most a little more than 400 nm, and cannot reflect ultraviolet light. Figure 6 shows the reflectance of the white case for the light guide body.

### Problem 4

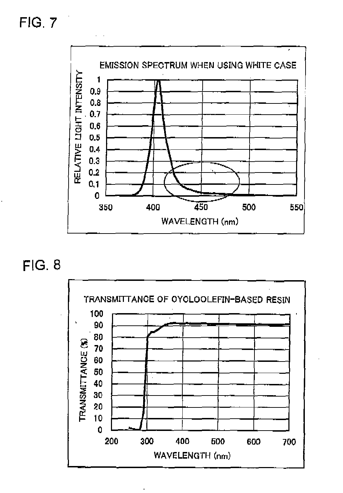

When the white case (made of, for example, polycarbonate containing titanium dioxide) is combined with the light guide body, noise light is emitted from the white case.
The white case emits fluorescence of visible light which becomes noise. As is apparent from the comparison with Figure 4 (showing the emission spectrum of the LED having the emission peak wavelength in the vicinity of 400 nm), the light emitted from the white case becomes bluish light having a spectrum shape whose foot portion extends to the long wavelength side as shown in Figure 7.

### Means for Solving the Problems

The present invention has been made to solve the above described problems, and an object of the present invention is to provide an ultraviolet line illumination apparatus which can be incorporated into an apparatus for reading information of a document, for example a bill or bank note, printed with ink that emits fluorescence when being irradiated with ultraviolet rays.

To this end, an ultraviolet line illumination apparatus according to the present invention is configured by including a rod-shaped light guide body, and an ultraviolet LED light emission unit, and is configured such that the light guide body is formed of a cycloolefin-based resin.

The ultraviolet-ray diffusion reflection surface of the light guide body can be formed into a shape with alternating protrusions and recessions, or can be pattern-printed with ink containing a metal powder. The ultraviolet-ray diffusion reflection surface, which is formed into the shape with alternating protrusions and recessions, can also be pattern-printed with the ink containing the metal powder. Further, it is also preferred that the package forming the ultraviolet LED light emission unit is formed with a resin containing a metal powder.
Note that it is preferred that the ultraviolet LED light emission unit is attached to an end section of a light guide body case configured to be loaded with the rod-shaped light guide body, and that the light guide body case is formed of a resin containing a metal powder.

In the ultraviolet line illumination apparatus according to the present invention, it is preferred to use an ultraviolet LED light emission unit in which the peak wavelength of the ultraviolet ray emitted from the ultraviolet LED is in the vicinity of 400 nm or in the vicinity of 365 nm.

Any of a contact type image sensor incorporating the ultraviolet line illumination apparatus according to the present invention, an image reading apparatus using the contact type image sensor, and a reduction optical system image reading apparatus incorporating the ultraviolet line illumination apparatus according to the present invention is included in the present invention.

### Advantages of the Invention

The ultraviolet line illumination apparatus according to the present invention includes: the light guide body formed of a cycloolefin-based resin having a high transmittance in the ultraviolet region; and the light guide body case formed of a resin containing a metal powder with a high reflectance in the ultraviolet region, and hence can efficiently emit the ultraviolet ray of the specific wavelength, for example, in the vicinity of 365 nm from the ultraviolet-ray diffusion reflection surface of the light guide body. Therefore, accurate information can be obtained when the ultraviolet line illumination apparatus is incorporated into an image reading apparatus, or the like, for obtaining information of a document, for example a bill or bank note, printed with ink which emits fluorescence when being excited by ultraviolet rays.

### Brief Description of the Drawings

Figure 1 is a perspective view showing an example of an ultraviolet line illumination apparatus using a light guide body;
Figure 2 is a graph showing the reflectance of white ink;
Figure 3 is a graph showing the transmittance of an acryl-based resin;
Figure 4 shows the emission spectrum of a 400 nm LED;
Figure 5 shows the emission spectrum of a 365 nm LED;
Figure 6 is a graph showing the reflectance of a white case;
Figure 7 shows the emission spectrum at the time of using the white case;
Figure 8 is a graph showing the transmittance of a cycloolefin-based resin;
Figure 9 is a graph showing the reflectance of a light guide body case containing an aluminum powder;
Figure 10 shows an emission spectrum of the light guide body case containing the aluminum powder; and
Figure 11 is a graph showing the reflectance of ink containing an aluminum powder.

### Description of Symbols

1 ... Ultraviolet line illumination apparatus, 2 ... Light guide body, 3 ... Light guide body case, 4 ... Ultraviolet LED light emission unit.

### Best Mode for Carrying Out the Invention

In the following, a preferred embodiment according to the present invention will be described with reference to the accompanying drawings. An ultraviolet line illumination apparatus according to the present invention has the same form as that shown in Figure 1 described above, and hence will be described with reference to Figure 1.

An ultraviolet line illumination apparatus I is configured by a rod-shaped light guide body 2, a light guide body case 3 to be loaded with the light guide body, and an ultraviolet LED light emission unit 4 attached to an end section of the light guide body case 3. Although the light guide body 2 has a rod-shaped form, there is no restriction in the cross sectional shape of the light guide body 2, and hence it is possible to suitably adopt any shape, such as a semicircular shape, an elliptical shape, and a polygonal shape, in addition to the chamfered rectangular parallelepiped shape as shown in Figure 1. Further, the ultraviolet LED light emission unit 4 may be attached to one end of the light guide body case 3 as shown in Figure 1, or may also be attached to both ends of the light guide body case 3.

In the present invention, a cycloolefin-based resin is used as the material of the light guide body 2. Unlike the acryl-based resin, the cycloolefm-based resin exhibits a high transmittance at any of the wavelengths in the vicinity of 365 nm and in the vicinity of 400 nm, which are the emission peak wavelengths of the ultraviolet LED. As examples of such cycloolefm-based resin, "ZEONOR" and "ZEONEX" made by Nippon Zeon Co. Ltd., and "TOPAS" made by Polyplastics Co. Ltd. are listed.

In general, when the wavelength of excitation light and the wavelength of fluorescence are more separated from each other, it is possible to more easily separate the excitation light causing noise at the time of reading. Therefore, also for the ultraviolet LED, the excitation light of 365 nm is more preferred than the excitation light of 400 nm. By using the cycloolefin-based resin as the material of the light guide body 2, it is possible to manufacture not only the light guide body line illumination apparatus 1 using the 400 nm ultraviolet LED but also the light guide body line illumination apparatus 1 using the 365 nm ultraviolet LED.

Further, the light guide body case 3 is formed of a resin, such as polycarbonate containing a metal powder. The kind of metal powder to be contained in the resin is not limited in particular, as long as the metal powder can reflect the light of any of the wavelengths in the vicinity of 365 nm and in the vicinity of 400 nm, which are the emission peak wavelengths of the ultraviolet LED. However, an aluminum powder can be suitably used.

Further, it is preferred that the package forming the ultraviolet LED light emission unit 4 is also formed of a resin, such as polybutylene terephthalate containing a metal powder. For making a metal powder contained in the resin, 2 to 10 wt.% (for example, 5 wt.%) of a metal powder of aluminum, or the like, is kneaded into 100 pts. wt. of the resin, and thereby the light guide body case 3 or the package 4 for the light emission unit can be formed by molding the obtained resin material. The particle diameter of the metal powder is set to 50 µm or less (for example, 20 µm).

In the wavelength region of 400 nm or less, the light reflectance of the resin with the aluminum powder kneaded therein is higher than the light reflectance of the white resin with titanium dioxide kneaded therein. Therefore, the illumination efficiency is improved as compared with the conventional case where the white case 3 or the white LED substrate material 4 is used. Further, the fluorescence of visible light emitted from the case 3 to cause noise is also prevented.

In the ultraviolet line illumination apparatus 1 according to the present invention, it is preferred that the ultraviolet-ray diffusion reflection surface of the light guide body 2 is formed into a shape with alternating protrusions and recessions. Alternatively, instead of forming the shape with alternating protrusions and recessions, it is also preferred that a pattern is printed on the ultraviolet-ray diffusion reflection surface with ink containing a metal powder. It is also possible to use both the shape with alternating protrusions and recessions, and the pattern printed with the ink.

When the ultraviolet-ray diffusion reflection surface of the light guide body 2 is formed into the shape with alternating protrusions and recessions or has the pattern printed thereon with the ink containing the metal powder, the ultraviolet light is scattered and reflected by the ultraviolet-ray diffusion reflection surface so as to be emitted from the light guide body 2. The light reflectance of the light guide body 2 painted with the conventional white ink is significantly lowered in the wavelength region of at most a little more than 400 nm, and hence prevents the ultraviolet light from being reflected. However, when the ultraviolet light is reflected by the surface of the light guide body 2, which surface is formed into the shape with alternating protrusions and recessions, the reflection is caused by the difference in the refractive index between the light guide body 2 and the air, and hence the ultraviolet light can be reflected by the light guide body 2 as long as the ultraviolet light is in the wavelength range of light that can be transmitted through the light guide body 2. Further, in the case of the pattern printing with ink containing the metal powder of aluminum, the reflectance of the printed portion can be maintained at 60% or more even for the ultraviolet light of the wavelength of 400 nm or less, as shown in the example described below. Therefore, excellent reflection characteristics can be obtained as compared with the case of using the conventional white ink.

With the above described configuration, it became possible to manufacture a light guide body line illumination apparatus 1 using an ultraviolet LED, which apparatus could not be realized with the conventional white ink. The light guide body line illumination apparatus according to the present invention can be incorporated into a contact type image sensor which receives fluorescence from a document or a bill or bank note by using an image pickup element provided immediately below the document or the bill or bank note. Further, the contact type image sensor is incorporated into an image reading apparatus. Further, the ultraviolet line illumination apparatus according to the present invention can also be incorporated into a reduction optical system image reading apparatus which, while returning fluorescence from a document or a bill or bank note by a mirror, forms the image of the fluorescence by guiding the fluorescence to a lens.

In order to describe the present invention in more detail, examples will be described below.

### (Example 1)

A light guide body was manufactured by using "ZEONOR" which is a cycloolefin-based resin and which is made by Nippon Zeon Co. Ltd. Further, a light guide body case was manufactured by using a resin containing a metal powder, which was formed by kneading 5 wt.% of an aluminum powder having an average particle diameter of 20 µm into 100 pts. wt. of polycarbonate. Further, a resin containing a metal powder, which was formed by kneading 5 wt.% of an aluminum powder having an average particle diameter of 20 µm into 100 pts. wt. of poly butylene terephthalate, was used as a package material of the ultraviolet LED light emission unit.

In the light guide body line illumination apparatus, the excitation light causing noises at the time of reading can be more easily separated when the wavelength of the excitation light and the wavelength of fluorescence are more separated from each other, and hence it is more preferable to use the ultraviolet ray of 365 nm rather than the ultraviolet ray of 400 nm. Since the light guide body according to the present embodiment is formed of the cycloolefm-based resin, the transmittance of the light guide body is not lowered even in the wavelength region of 400 nm or less as compared with the acryl-based resin, and even the ultraviolet ray of the wavelength of 365 nm is transmitted through the light guide body. Therefore, it is possible to manufacture the light guide body line illumination apparatus adopting the 365 nm LED. Figure 8 shows the transmittance of the cycloolefin-based resin.

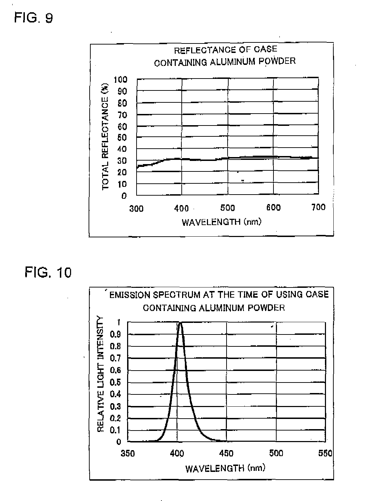

Further, in the case of the present example where the light guide body case was manufactured by using polycarbonate containing the aluminum powder and where the ultraviolet LED light emission unit was packaged by using butylene terephthalate containing the aluminum powder, the illumination efficiency was improved in the ultraviolet region as compared with the conventional case of using the white case and the LED substrate, each containing titanium dioxide. When Figure 9 is compared with Figure 6 described above, it can be seen that, in the wavelength region of 400 nm or less, the light reflectance of the resin with aluminum kneaded therein is higher than the light reflectance of the white resin.

The ultraviolet line illumination apparatus was assembled by using the light guide body, the light guide body case, and the ultraviolet LED light emission unit, which were manufactured in the present example, and the ultraviolet emission spectrum was measured. From Figure 10 showing the measurement result, it can be seen that the measured spectrum distribution is not different from the spectrum distribution of the single LED shown in Figure 4 described above, that is, the fluorescence noise of visible light is not caused from the light guide body case.

### (Example 2)

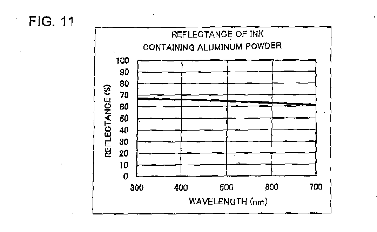

A reflection pattern was printed on the ultraviolet-ray diffusion reflection surface of the light guide body by using ink containing 5 wt.% of an aluminum powder having an average particle diameter of 20 µm. Figure 11 shows the reflectance of the light guide body formed in this way. By using the ink containing the aluminum powder, it is possible to maintain the reflectance at 60% or more even in the ultraviolet wavelength region of 400 nm or less, and to obtain excellent reflection characteristics as compared with the reflection characteristics obtained by using the conventional white ink.

## Claims

1. An ultraviolet line illumination apparatus including a rod-shaped light guide body and an ultraviolet LED light emission unit, wherein the light guide body is formed of a cycloolefin-based resin.

2. The ultraviolet line illumination apparatus according to claim 1, wherein the ultraviolet-ray diffusion reflection surface of the light guide body is formed into a shape with alternating protrusions and recessions.

3. The ultraviolet line illumination apparatus according to claim 1, wherein the ultraviolet LED light emission unit is attached to an end section of a light guide body case to be loaded with the rod-shaped light guide body, and wherein the light guide body case is formed of a resin containing a metal powder.

4. The ultraviolet line illumination apparatus according to claim 1, wherein the ultraviolet-ray diffusion reflection surface of the light guide body is subjected to pattern printing using ink containing a metal powder.

5. The ultraviolet line illumination apparatus according to one of claim 1 to claim 4, wherein a package forming the ultraviolet LED light emission unit is formed of a resin containing a metal powder.

6. The ultraviolet line illumination apparatus according to claim 3 to claim 5, wherein the metal powder is an aluminum powder.

7. The ultraviolet line illumination apparatus according to claim 1 to claim 6, wherein the peak wavelength of the ultraviolet ray emitted from the ultraviolet LED of the ultraviolet LED light emission unit is in the vicinity of 365 nm or in the vicinity of 400 nm.

8. A contact type image sensor configured by incorporating the ultraviolet line illumination apparatus according to one of claim 1 to claim 7.

9. An image reading apparatus using the contact type image sensor according to claim 8.

10. A reduction optical system image reading apparatus configured by incorporating the ultraviolet line illumination apparatus according to one of claim 1 to claim 7.
